# EUROPEAN PATENT SPECIFICATION

(11) **EP 4 261 999 B1**
(45) Date of publication and mention of the grant of the patent: **01.04.2026**
(21) Application number: 22896180.1
(22) Date of filing: 19.10.2022
(51) Int. Cl.: H01M 50/271, H01M 50/24, H01M 50/224, H01M 50/276

(54) **BATTERY MODULE HAVING IMPROVED AIRTIGHTNESS AND HEAT RESISTANCE OF MODULE CASE**
BATTERIEMODUL MIT VERBESSERTER LUFTDICHTHEIT UND WÄRMEBESTÄNDIGKEIT DES MODULGEHÄUSES
MODULE DE BATTERIE PRÉSENTANT UNE ÉTANCHÉITÉ À L'AIR ET UNE RÉSISTANCE À LA CHALEUR DE BOÎTIER DE MODULE AMÉLIORÉES

(30) Priority: 18.11.2021 KR 20210159840
(43) Date of publication of application: 18.10.2023
(73) Proprietor: LG Energy Solution, Ltd., Seoul 07335 (KR)
(72) Inventor: LEE, Chang-Hun, Daejeon 34122 (KR)
(74) Representative: Plasseraud IP
(86) International application number: PCT/KR2022/095139
(87) International publication number: WO 2023/090983

(56) References cited:
- EP-A1- 3 783 686
- KR-A- 20180 024 972
- KR-A- 20190 074 516
- KR-A- 20190 078 521
- KR-A- 20210 129 512
- KR-A- 20210 133 541

## Description

### TECHNICAL FIELD

The present disclosure relates to a battery module, and more specifically, to a battery module having improved airtightness and heat resistance so that flame and gas are not discharged to the outside for a certain period of time when the battery module is ignited.

### BACKGROUND ART

A secondary battery may be used alone, but in general, a plurality of secondary batteries are electrically connected to each other in series and/or in parallel in many cases. In particular, a plurality of secondary batteries may be accommodated in one module case in a state of being electrically connected to each other to constitute one battery module. Also, the battery module may be used alone, or two or more may be electrically connected to each other in series and/or in parallel to constitute a higher level device such as a battery pack.

Meanwhile, when a plurality of battery modules exist in a dense state, they may be vulnerable to fire. For example, when a thermal runaway occurs in a battery cell of any one battery module and this intensifies, high-temperature gas and sparks may be ejected from the battery cell. Here, the sparks refer to active materials deintercalated from electrodes inside the battery cell or molten aluminum particles. At this time, a flame or the like may occur in the battery cell in some cases. When the gas or flame is indiscriminately discharged to the outside of the battery module, thermal damage may be given to the surrounding battery modules, and thus fire may rapidly spread.

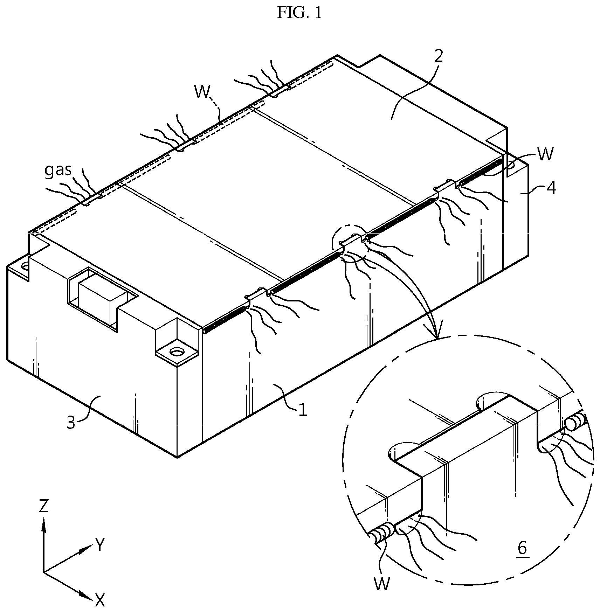

However, the conventional battery module has an incomplete airtight structure, and thus, when the battery module is ignited therein, gas or flame is discharged in a plurality of unspecified directions, thereby causing a problem that the fire spreads more easily to other battery modules. For example, as shown in FIG. 1, the battery module according to the prior art includes a module housing composed of a U frame 1 and a top plate 2, and a front cover 3 and a rear cover 4 respectively covering the front and rear of the module housing. Here, the U frame refers to a frame in which a bottom plate covering the lower portions of battery cells and two side plates covering both side portions of the battery cells are integrally manufactured, and the upper, front, and rear portions thereof are open. As shown in the enlarged view of FIG. 1, such a module housing is configured to have an airtightness by making a groove to fit and fix the U frame and the top plate to each other, and then welding the portion W where the edges of the U frame and the top plate are in contact with each other.

However, it is difficult to sufficiently secure airtightness of the grooved portions 6 in the U frame and the top plate because they are not welded due to the assembly structure. For example, even if a sealing material such as rubber or sealant is used to block the groove portion 6, the sealing material melts and disappears when high-temperature gas or flame is generated, and thus gas or flame may be discharged to the outside through the corresponding portion. Moreover, since the front cover and the rear cover of the conventional battery module are made of plastic injection molding, it is difficult to secure an airtight structure by welding a portion where the module housing and the front cover or rear cover are assembled. Also, the module housing is made of a single metal of aluminum-based (melting point of about 660 degrees) in the conventional battery module, and thus there is a problem in that airtightness may not be maintained due to thermal deformation of the U frame or top plate at a certain temperature or higher during ignition.

Examples of background art can be found in KR20190078521A.

### DISCLOSURE

### Technical Problem

The present disclosure is designed to solve the problems of the related art, and therefore the present disclosure is directed to providing a battery module having enhanced airtightness so that gas or flame is not discharged to the outside for a certain period of time when the battery module is ignited therein.

Technical problems to be solved by the present disclosure are not limited to the above-described problems, and other problems not mentioned herein may be clearly understood by those skilled in the art from the following description of the present disclosure.

### Technical Solution

According to the present disclosure, there is provided a battery module according to the independent claim 1 including at least one battery cell; and a module case composed of a case body having an inner space for accommodating the battery cell and an open end on the upper side; and a top plate that covers the upper side of the case body and is coupled to the upper portion of the case body, wherein the open end of the case body has an assembly guide protrusion protruding upward from the surface thereof, and the top plate has an assembly guide hole that is press-fitted with the assembly guide protrusion at an edge thereof, and the entire outer circumference of the portion where the open end of the case body and the edge of the top plate are in contact with each other is welded without a gap, such that the module case has a welding bead line that continues along the entire circumference without being cut off.

The case body may be provided in the form of a sealed box except for the upper side.

The case body may include a bottom plate forming the bottom surface; and a wall plate forming the front, rear, left, and right walls, and the open end of the case body may be formed on the upper end of the wall plate.

The open end of the case body may be provided in the form of a flange by horizontally protruding outward from other portions of the wall plate.

The module case may be formed of a clad metal in which dissimilar metals are bonded to each other.

The case body may include an outside portion forming an outer surface of the case body and made of a first metal; and an inside portion forming an inner surface of the case body and made of a second metal having a higher melting point than the first metal, wherein the open end of the case body may be formed on an upper edge of the outside portion.

The top plate may include a first lid portion and a second lid portion forming a double layer, wherein the first lid portion may form an outer surface of the top plate and be made of the first metal, and the second lid portion may form an inner surface of the top plate and be made of the second metal.

The first lid portion may be seated on an upper edge of the outside portion, and the second lid portion may be seated on an upper edge of the inside portion.

The assembly guide hole may be provided on an edge of the first lid portion.

The first lid portion and the second lid portion may be provided to have the same area, and the assembly guide hole may be provided only on the edge of the second lid portion among the edges of the first lid portion and the second lid portion.

According to another aspect of the present disclosure, there is provided a battery pack including the above-described battery module.

### Advantageous Effects

According to one aspect of the present disclosure, there may be provided a battery module having improved airtightness so that gas or flame is not discharged to the outside for a certain period of time when the battery module is ignited therein.

According to the present disclosure, the top plate is stably seated on the open end of the case body constituting the module case, and the entire circumference of the portion where the open end of the case body and the edge of the top plate are in contact with each other is welded, whereby airtightness may be ensured even during the internal ignition of the battery module.

In addition, according to another aspect of the present disclosure, the module case is made of a clad metal, but a metal having relatively better heat resistance than aluminum forms the inner surface of the module case, so that a battery module having better mechanical rigidity and higher heat resistance compared to the prior art may be provided.

Advantageous effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a view schematically showing a battery module according to the prior art.
FIG. 2 is a view schematically showing a battery module according to an embodiment of the present disclosure.
FIG. 3 is a partially exploded perspective view of the battery module of FIG. 2.
FIG. 4 is a view showing an assembly guide protrusion of a case body and an assembly guide hole of a top plate according to an embodiment of the present disclosure.
FIG. 5 is an enlarged view of a portion of a module case according to an embodiment of the present disclosure and shows an assembly and welding structure of a case body and a top plate.
FIG. 6 is a perspective view showing a case body according to an embodiment of the present disclosure.
FIG. 7 is a perspective view of a top plate as viewed from bottom to top according to an embodiment of the present disclosure.
FIG. 8 is a partial cross-sectional view of a battery module according to an embodiment of the present disclosure.
FIG. 9 is a partial cross-sectional view of a battery module according to another embodiment of the present disclosure.

### BEST MODE

Hereinafter, preferred embodiments of the present disclosure will be described in detail with reference to the accompanying drawings. The scope of the invention is defined by the appended claims.

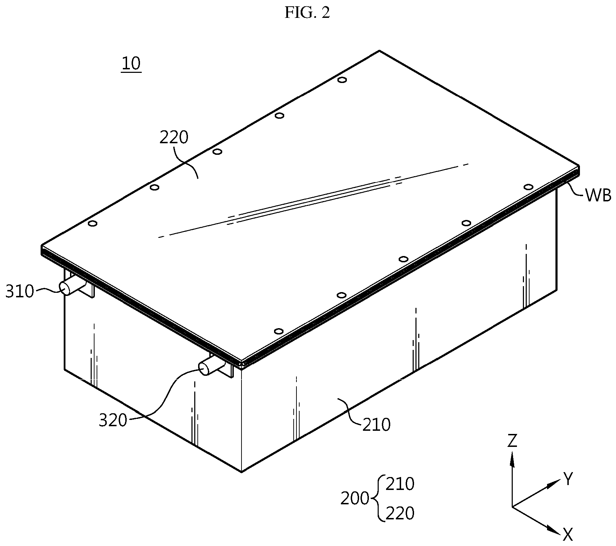

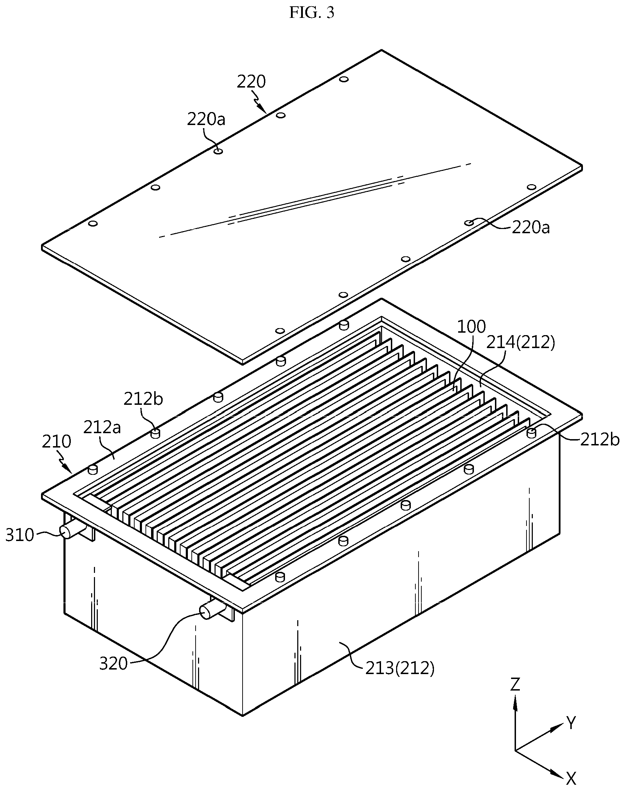

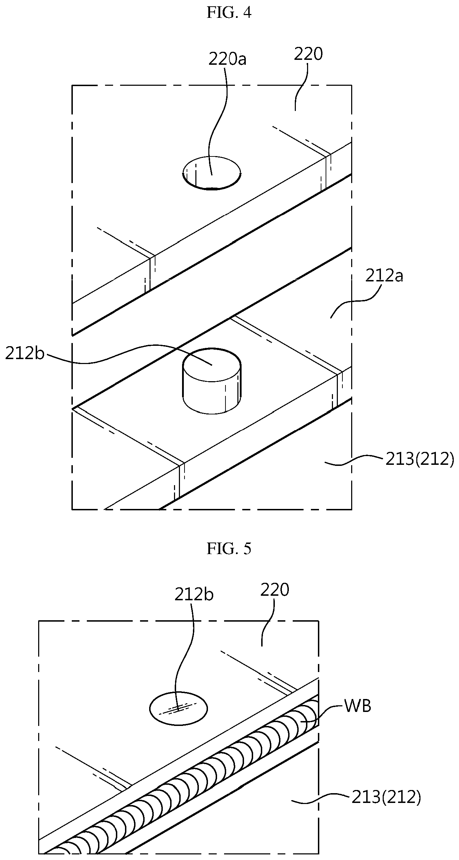

FIG. 2 is a view schematically showing a battery module according to an embodiment of the present disclosure, FIG. 3 is a partially exploded perspective view of the battery module of FIG. 2, FIG. 4 is a view showing an assembly guide protrusion of a case body and an assembly guide hole of a top plate according to an embodiment of the present disclosure, and FIG. 5 is an enlarged view of a portion of a module case according to an embodiment of the present disclosure and shows an assembly and welding structure of a case body and a top plate.

Referring to FIGS. 2 to 5, the battery module 10 according to an embodiment of the present disclosure includes a plurality of battery cells 100, and a module case 200 composed of a case body 210 having an inner space capable of accommodating the plurality of battery cells 100 and an open end 212a on an upper side, and a top plate 220 coupled to an upper portion of the case body 210 so that the inner space is sealed.

The battery cell 100 has a thin plate-shaped body and may be a pouch-type secondary battery.

The pouch-type secondary battery includes a pouch case, an electrode assembly and an electrolyte provided to be accommodated in the pouch case. For example, the pouch-type case may be composed of two pouches, at least one of which may have a concave inner space formed therein. In addition, the electrode assembly may be accommodated in the inner space of the pouch. Since the circumferences of the two pouches are fused to each other, the inner space in which the electrode assembly is accommodated may be sealed. An electrode lead may be attached to the electrode assembly, and the electrode lead may function as an electrode terminal of a pouch-type secondary battery by being interposed between fused portions of the pouch case and exposed to the outside of the pouch case. As shown in FIG. 3, these pouch-type secondary batteries may be intensively accommodated in the case body 210 in a stack structure where each one is erected vertically and stacked in a left-right direction.

Of course, the battery cell 100 does not necessarily have to be composed of a pouch-type secondary battery. For example, unlike the present embodiment, the battery cell 100 may be composed of a cylindrical secondary battery or a prismatic secondary battery using a metal can as a case. That is, various battery cells 100 known at the time of filing of the present disclosure may be employed in the battery module 10 of the present disclosure.

The module case 200 is a structure for accommodating, supporting and protecting the battery cells 100, and is composed of the case body 210 and the top plate 220.

As will be described in detail later, the battery module 10 of the present disclosure has a structure in which all sides of the case body 210 except for the upper portion are blocked, and is configured to cover the upper portion of the case body 210 with the top plate 220 and not to easily destroy the airtightness even during the ignition of the battery cells 100 by completely welding the portion where the open end 212a of the case body 210 and the top plate 220 are in contact with each other along the circumferential direction.

For reference, the positive electrode terminal 310 and the negative electrode terminal 320 of the battery module 10 may be configured to pass through one wall of the case body 210 as shown in FIG. 3. Also, in order to secure insulation between the positive electrode terminal 310 and the negative electrode terminal 320 and the case body 210, a portion passing through the case body 210 at the positive electrode terminal 310 and the negative electrode terminal 320 may be insulated with a material having excellent fire resistance and insulation, such as a mica or the like.

In addition, although not shown for convenience of drawing, a gas venting port (not shown) may be provided on at least one side of the case body 210 to intentionally discharge gas from the module case 200 through a specific path when the battery cell 100 is ignited. For example, the gas venting port has a structure in which a rupture film is applied to a hole and is configured such that the rupture film is normally blocked, but may be destroyed and opened when the internal pressure of the module case 200 rises above a certain pressure. Also, by connecting a gas pipe (not shown) to the gas venting port outside the battery module 10, high-temperature gas may move through a specific path along the gas pipe when an event occurs.

Hereinafter, the assembly and welding structure of the case body 210 and the top plate 220, which are the main components of the module case 200, will be described in detail.

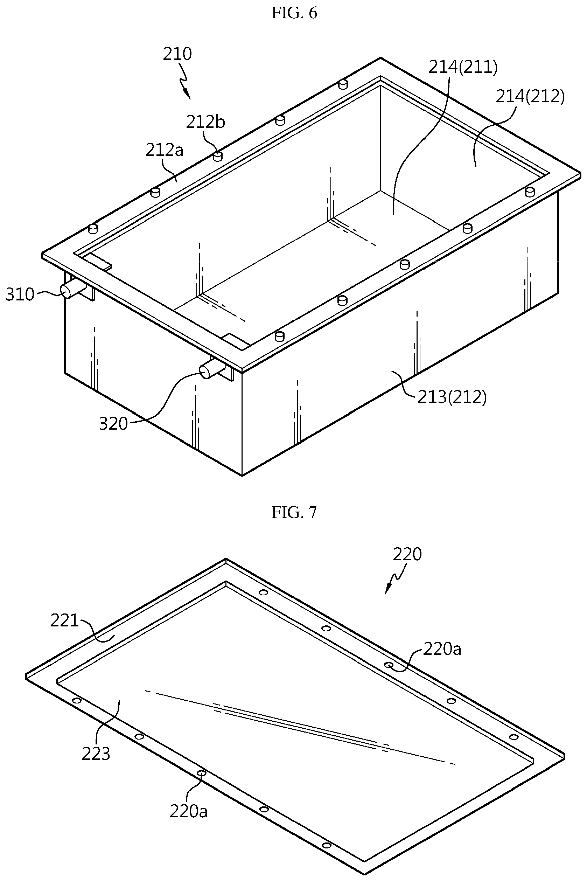

The case body 210 (refer to FIG. 6) includes a bottom plate 211 forming a bottom surface supporting the lower portion of the battery cell 100 stack and a wall plate 212 forming a wall surface covering the front, rear, left, and right sides of the battery cell 100 stack, wherein the upper side thereof is open, and the remaining portions except for the upper side may be provided in the form of a sealed box. Therefore, the open end 212a of the case body 210 is provided on the upper edge of the wall plate 212.

As shown in FIG. 3, the open end 212a of the case body 210 is provided in a flange shape protruding horizontally outward from other portions of the wall plate 212. That is, the open end 212a of the case body 210 is configured to protrude over the entire circumference of the upper end of the wall plate 212. Accordingly, the case body 210 has an open end 212a having a sufficiently wide contact interface with the top plate 220, so that it has a high degree of freedom in designing the size and position of assembly guide protrusions 212b to be described later.

The open end 212a of the case body 210 has an assembly guide protrusion 212b protruding upward from its surface. The assembly guide protrusion 212b may be used as a means for placing the top plate 220 fixedly on the open end 212a of the case body 210 and preventing movement during subsequent welding.

As shown in FIG. 3, a plurality of assembly guide protrusions 212b may be provided, and the plurality of assembly guide protrusions 212b may be located at regular intervals in the left long side line and the right long side line of the open end 212a of the case body 210 and provided in a cylindrical shape.

Meanwhile, the scope of the present disclosure is not limited to the position and shape of the assembly guide protrusion 212b. The assembly guide protrusion 212b may be configured differently from the present embodiment. For example, the assembly guide protrusion 212b may be located at regular intervals around the entire circumference of the open end 212a of the case body 210 including the long side line and the short side line and provided in various shapes such as a polygonal column shape, a hemispherical shape, or the like.

The assembly guide protrusion 212b may function as a stopper for preventing erroneous assembly of the case body 210 and the top plate 220 and preventing the top plate 220 from moving up, down, left, and right.

The top plate 220 is a cover structure for sealing the inner space of the case body 210, and may be provided to be accurately aligned with the open end 212a of the case body 210 based on the assembly guide protrusion 212b.

The top plate 220 has an assembly guide hole 220a at its edge. When the top plate 220 is assembled to the case body 210, the assembly guide hole 220a and the assembly guide protrusion 212b are press-fitted in the vertical direction, and thus the edge of the top plate 220 is accurately aligned with the open end 212a of the case body 210.

In other words, as shown in FIG. 3, the top plate 220 includes as many assembly guide holes 220a as the number of assembly guide protrusions 212b, and the assembly guide holes 220a are configured at each position in one-to-one correspondence to the assembly guide protrusions 212b vertically at the edge of the top plate 220. Therefore, as shown in FIG. 4, when the top plate 220 is placed on the open end 212a of the case body 210 by aligning each assembly guide hole 220a based on each assembly guide protrusion 212b, the case body 210 and the top plate 220 may be accurately aligned.

In addition, since each assembly guide protrusion 212b and each assembly guide hole 220a are press-fitted to each other in the vertical direction, the position between the case body 210 and the top plate 220 is not dislocated during subsequent welding work.

As described above, in a state in which the top plate 220 is accurately placed on the open end 212a of the case body 210, the entire outer circumference of the portion where the open end 212a of the case body 210 and the edge of the top plate 220 are in contact with each other is welded without a gap, as shown in FIG. 5. Accordingly, the module case 200 of the battery module 10 according to the present disclosure (see FIG. 2) has a welding bead (WB) line that continues along the entire circumference without being cut off.

Therefore, even when the battery module 10 is ignited, the airtight structure between the case body 210 and the top plate 220 is not easily broken, and thus high-temperature gas or flame is not discharged to the outside between the open end 212a of the case body 210 and the edge of the plate 220.

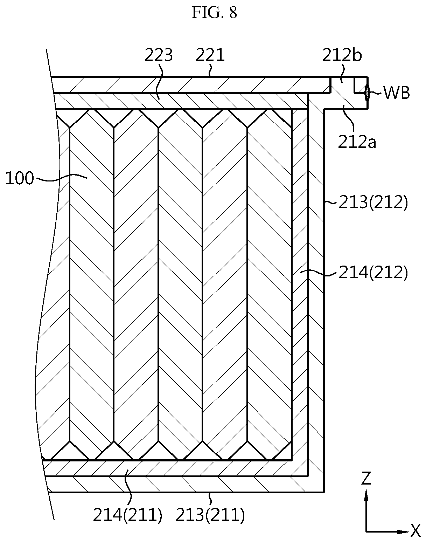

FIG. 6 is a perspective view showing a case body according to an embodiment of the present disclosure, FIG. 7 is a perspective view of a top plate as viewed from bottom to top according to an embodiment of the present disclosure, and FIG. 8 is a partial cross-sectional view of a battery module according to an embodiment of the present disclosure.

Meanwhile, the module case 200 according to an embodiment of the present disclosure is made of a lightweight clad metal in which dissimilar metals are bonded to each other so as to have high heat resistance while being lightweight, and may be formed of different inner and outer materials.

Specifically, referring to FIGS. 6 and 8, the case body 210 includes an outside portion 213 forming an outer surface of the case body 210 and made of a first metal, and an inside portion 214 forming an inner surface of the case body 210 and made of a second metal having a higher melting point than the first metal.

In the present embodiment, the first metal may be lightweight aluminum (Al), and the second metal may be stainless steel. The melting point of aluminum is approximately 660°C, and the melting point of stainless steel is approximately 2750°C. That is, in the case body 210 according to the present embodiment, the outside portion 213 is made of aluminum and the inside portion 214 is made of stainless steel having higher heat resistance than aluminum. Of course, at least one of the first metal and the second metal may be substituted with a metal having high heat resistance different from that of the present embodiment.

Since the case body 210 is made of clad metal as described above, the bottom plate 211 and the wall plate 212 have a double layer structure as shown in FIG. 6. In addition, the case body 210 of this embodiment has a step between the upper edge of the outside portion 213 and the upper edge of the inside portion 214 forming the wall plate 212. That is, the upper end of the outside portion 213 is provided higher than the upper end of the inside portion 214, and the upper edge of the outside portion 213 is used as the open end 212a of the case body 210.

As shown in FIG. 7, the top plate 220 includes a first lid portion 221 and a second lid portion 223 forming a double layer.

The first lid portion 221 forms an outer surface of the top plate 220 and is made of the first metal. And, the second lid portion 223 forms an inner surface of the top plate 220 and is made of the second metal. That is, in the top plate 220 according to the present embodiment, the first lid portion 221 is made of aluminum and the second lid portion 223 is made of stainless steel.

In the case of this embodiment, as shown in FIGS. 7 and 8, the assembly guide hole 220a is provided on the edge of the first lid portion 221, the edge of the first lid portion 221 is seated on the upper edge of the outside portion 213 of the case body 210, and the edge of the second lid portion 223 is seated on the upper edge of the inside portion 214 of the case body 210.

According to the configuration of the module case 200, all inner walls of the module case 200 surrounding the internal space of the module case 200 are made of stainless steel having high heat resistance. Therefore, when the battery module 10 is ignited therein, the module case 200 endures even at a high temperature without deformation, and thus airtightness may be maintained.

As described above, according to an embodiment of the present disclosure, since the top plate 220 may be stably seated on the open end 212a of the case body 210 and the entire circumference of the portion where the open end 212a of the case body 210 and the edge of the top plate 220 are in contact with each other may be welded, gas or flame may not be indiscriminately discharged to the outside of the module case 200 when the battery module 10 is ignited therein.

In addition, the module case 200 is made of a clad metal, but a metal having relatively better heat resistance than aluminum forms the inner surface of the module case 200, so that a battery module 10 having better mechanical rigidity and higher heat resistance compared to the prior art may be provided.

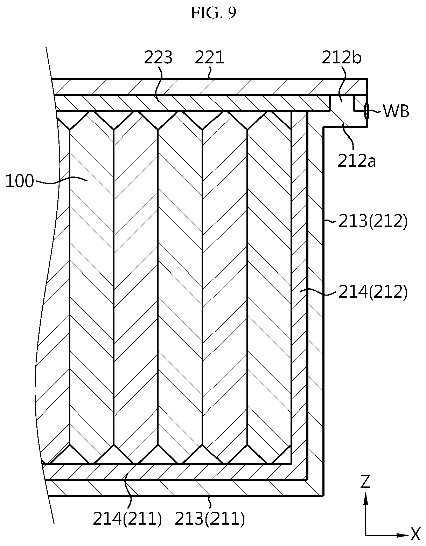

Next, a battery module 10 according to another embodiment of the present disclosure will be briefly described with reference to FIG. 9. The same member numerals as those in the above-described embodiment represent the same members, and redundant descriptions of the same members will be omitted, but differences from the above-described embodiment will be mainly described.

When compared with the previous embodiment, the battery module 10 according to another embodiment of the present disclosure has a difference in an assembly structure of the assembly guide protrusion 212b of the case body 210 and the assembly guide hole 220a of the top plate 220.

Referring to FIG. 9, the outside portion 213 and the inside portion 214 of the wall plate 212 according to another embodiment of the present disclosure have upper ends of the same height. Also, in the case of the top plate 220, the first lid portion 221 and the second lid portion 223 are configured to have the same area, but the assembly guide hole 220a is configured to be provided only on the edge of the second lid portion 223 among the edges of the first lid portion 221 and the second lid portion 223. That is, another embodiment of the present disclosure has a structure in which the upper portion of the assembly guide hole 220a is blocked. Therefore, unlike the above-described embodiment, the assembly guide protrusion 212b of the open end 212a of the case body 210 is not exposed above the assembly guide hole 220a.

For example, if there is a slight gap between the assembly guide protrusion 212b and the assembly guide hole 220a due to assembly tolerance, there may be room for gas to leak through the gap in the case of the above-described embodiment. However, in the case of another embodiment of the present disclosure, since the upper portion of the assembly guide hole 220a is blocked, there is an advantage of being no room for gas to leak out even if there is a gap between the assembly guide protrusion 212b and the assembly guide hole 220a as described above.

Meanwhile, a battery pack (not shown) according to the present disclosure includes one or more battery modules described above. In addition to the battery module, the battery pack may further include a pack case (not shown) for accommodating the battery module, various devices (not shown) for controlling charge/discharge of the battery module, such as a battery management system (BMS), a current sensor, a fuse, and the like.

Meanwhile, the terms indicating directions as used herein such as upper, lower, left, right, front, and rear are used for convenience of description only, and it is obvious to those skilled in the art that the terms may change depending on the position of the stated element or an observer.

While the present disclosure has been hereinabove described with regard to a limited number of embodiments and drawings, the present invention is defined by the scope of the appended claims.

## Claims

1. A battery module (10) comprising:
at least one battery cell (100); and
a module case (200) composed of a case body (210) having an inner space for accommodating the battery cell (100) and an open end (212a) on the upper side; and a top plate (220) that covers the upper side of the case body (210) and is coupled to the upper portion of the case body (210),
**characterized in that** the open end (212a) of the case body (210) has an assembly guide protrusion (212b) protruding upward from the surface thereof, and the top plate (220) has an assembly guide hole (220a) that is press-fitted with the assembly guide protrusion (212b) at an edge thereof, and **in that**
the entire outer circumference of the portion where the open end (212a) of the case body (210) and the edge of the top plate (220) are in contact with each other is welded without a gap, such that the module case (200) has a welding bead (WB) line that continues along the entire circumference without being cut off.

2. The battery module (10) according to claim 1,
wherein the case body (210) is provided in the form of a sealed box except for the upper side.

3. The battery module (10) according to claim 1,
wherein the case body (210) comprises a bottom plate (211) forming the bottom surface; and a wall plate (212) forming the front, rear, left, and right walls, and
the open end (212a) of the case body (210) is formed on the upper end of the wall plate (212).

4. The battery module (10) according to claim 3,
wherein the open end (212a) of the case body (210) is provided in the form of a flange by horizontally protruding outward from other portions of the wall plate (212).

5. The battery module (10) according to claim 1,
wherein the module case (200) is formed of a clad metal in which dissimilar metals are bonded to each other.

6. The battery module (10) according to claim 5,
wherein the case body (210) comprises:
an outside portion (213) forming an outer surface of the case body (210) and made of a first metal; and an inside portion (214) forming an inner surface of the case body (210) and made of a second metal having a higher melting point than the first metal,
wherein the open end (212a) of the case body (210) is formed on an upper edge of the outside portion (213).

7. The battery module (10) according to claim 6,
wherein the top plate (220) comprises a first lid portion (221) and a second lid portion (223) forming a double layer,
wherein the first lid portion (221) forms an outer surface of the top plate (220) and is made of the first metal, and the second lid portion (223) forms an inner surface of the top plate (220) and is made of the second metal.

8. The battery module (10) according to claim 7,
wherein the first lid portion (221) is seated on an upper edge of the outside portion (213), and the second lid portion (223) is seated on an upper edge of the inside portion (214).

9. The battery module (10) according to claim 7,
wherein the assembly guide hole (220a) is provided on an edge of the first lid portion (221).

10. The battery module (10) according to claim 7,
wherein the first lid portion (221) and the second lid portion (223) are provided to have the same area, and
the assembly guide hole (220a) is provided only on the edge of the second lid portion (223) among the edges of the first lid portion (221) and the second lid portion (223).

11. A battery pack comprising a battery module (10) according to any one of claims 1 to 10.

## Patentansprüche

1. Batteriemodul (10), umfassend:
wenigstens eine Batteriezelle (100); und
ein Modulgehäuse (200), welches aus einem Gehäusekörper (210), welcher einen Innenraum zum Aufnehmen der Batteriezelle (100) und ein offenes Ende (212a) an der oberen Seite aufweist; und einer oberen Platte (220) besteht, welche die obere Seite des Gehäusekörpers (210) abdeckt und mit dem oberen Abschnitt des Gehäusekörpers (210) gekoppelt ist,
**dadurch gekennzeichnet, dass** das offene Ende (212a) des Gehäusekörpers (210) einen Montage-Führungsvorsprung (212b) aufweist, welcher nach oben von der Fläche davon vorsteht, und die obere Platte (220) ein Montage-Führungsloch (220a) aufweist, welches mit dem Montage-Führungsvorsprung (212b) an einem Rand davon pressgepasst ist, und dadurch, dass
der gesamte Außenumfang des Abschnitts, an welchem das offene Ende (212a) des Gehäusekörpers (210) und der Rand der oberen Platte (220) in Kontakt miteinander sind, ohne einen Abstand geschweißt ist, so dass das Modulgehäuse (200) eine Schweißwulst (WB)-Linie aufweist, welche entlang des gesamten Umfangs fortläuft, ohne abgeschnitten zu sein.

2. Batteriemodul (10) nach Anspruch 1,
wobei der Gehäusekörper (210) in der Form eines versiegelten Kastens außer der oberen Seite bereitgestellt ist.

3. Batteriemodul (10) nach Anspruch 1,
wobei der Gehäusekörper (210) eine untere Platte (211), welche die untere Fläche bildet; und eine Wandplatte (212) umfasst, welche die vorderen, hinteren, linken und rechten Wände bildet, und
das offene Ende (212a) des Gehäusekörpers (210) an dem oberen Ende der Wandplatte (212) gebildet ist.

4. Batteriemodul (10) nach Anspruch 3,
wobei das offene Ende (212a) des Gehäusekörpers (210) in der Form eines Flanschs bereitgestellt ist, indem es horizontal nach außen von anderen Abschnitten der Wandplatte (212) vorsteht.

5. Batteriemodul (10) nach Anspruch 1,
wobei das Modulgehäuse (200) aus einem beschlagenen Metall gebildet ist, in welchem unterschiedliche Metalle miteinander verbunden sind.

6. Batteriemodul (10) nach Anspruch 5,
wobei der Gehäusekörper (210) umfasst:
einen äußeren Abschnitt (213), welcher eine äußere Fläche des Gehäusekörpers (210) bildet und aus einem ersten Metall hergestellt ist; und
einen inneren Abschnitt (214), welcher eine innere Fläche des Gehäusekörpers (210) bildet und aus einem zweiten Metall hergestellt ist,
welches einen höheren Schmelzpunkt als das erste Metall aufweist,
wobei das offene Ende (212a) des Gehäusekörpers (210) an einem oberen Rand des äußeren Abschnitts (213) gebildet ist.

7. Batteriemodul (10) nach Anspruch 6,
wobei die obere Platte (220) einen ersten Deckelabschnitt (221) und einen zweiten Deckelabschnitt (223) umfasst, welche eine Doppelschicht bilden,
wobei der erste Deckelabschnitt (221) eine äußere Fläche der oberen Platte (220) bildet und aus dem ersten Metall hergestellt ist und der zweite Deckelabschnitt (223) eine innere Fläche der oberen Platte (220) bildet und aus dem zweiten Metall hergestellt ist.

8. Batteriemodul (10) nach Anspruch 7,
wobei der erste Deckelabschnitt (221) an einem oberen Rand des äußeren Abschnitts (213) sitzt und der zweite Deckelabschnitt (223) an einem oberen Rand des inneren Abschnitts (214) sitzt.

9. Batteriemodul (10) nach Anspruch 7,
wobei das Montage-Führungsloch (220a) an einem Rand des ersten Deckelabschnitts (221) bereitgestellt ist.

10. Batteriemodul (10) nach Anspruch 7,
wobei der erste Deckelabschnitt (221) und der zweite Deckelabschnitt (223) dazu bereitgestellt sind, dieselbe Fläche aufzuweisen, und
das Montage-Führungsloch (220a) lediglich an dem Rand des zweiten Deckelabschnitts (223) unter den Rändern des ersten Deckelabschnitts (221) und des zweiten Deckelabschnitts (223) bereitgestellt ist.

11. Batteriepack, umfassend ein Batteriemodul (10) nach einem der Ansprüche 1 bis 10.

## Revendications

1. Module de batterie (10) comprenant :
au moins une cellule de batterie (100) ; et
un boîtier de module (200) composé d'un corps de boîtier (210) ayant un espace interne pour loger la cellule de batterie (100) et une extrémité ouverte (212a) sur le côté supérieur ; et une plaque supérieure (220) qui recouvre le côté supérieur du corps de boîtier (210) et est couplée à la partie supérieure du corps de boîtier (210),
**caractérisé en ce que** l'extrémité ouverte (212a) du corps de boîtier (210) présente une protubérance de guidage d'assemblage (212b) faisant saillie vers le haut à partir de la surface de celle-ci, et la plaque supérieure (220) présente un trou de guidage d'assemblage (220a) qui est emmanché avec la protubérance de guidage d'assemblage (212b) sur un bord de celle-ci, et **en ce que**
toute la circonférence externe de la partie où l'extrémité ouverte (212a) du corps de boîtier (210) et le bord de la plaque supérieure (220) sont en contact l'un avec l'autre est soudée sans espace, de sorte que le boîtier de module (200) présente une ligne de cordon de soudure (WB) qui se prolonge le long de toute la circonférence sans interruption.

2. Module de batterie (10) selon la revendication 1,
dans lequel le corps de boîtier (210) se présente sous la forme d'une boîte scellée, à l'exception du côté supérieur.

3. Module de batterie (10) selon la revendication 1,
dans lequel le corps de boîtier (210) comprend une plaque inférieure (211) formant la surface inférieure ; et une plaque de paroi (212) formant les parois avant, arrière, gauche et droite, et
l'extrémité ouverte (212a) du corps de boîtier (210) est formée sur l'extrémité supérieure de la plaque de paroi (212).

4. Module de batterie (10) selon la revendication 3,
dans lequel l'extrémité ouverte (212a) du corps de boîtier (210) se présente sous la forme d'une bride en faisant saillie horizontalement vers l'extérieur à partir d'autres parties de la plaque de paroi (212).

5. Module de batterie (10) selon la revendication 1,
dans lequel le boîtier de module (200) est formé d'un métal plaqué dans lequel des métaux dissemblables sont liés entre eux.

6. Module de batterie (10) selon la revendication 5,
dans lequel le corps de boîtier (210) comprend :
une partie extérieure (213) formant une surface externe du corps de boîtier (210) et faite d'un premier métal ; et une partie intérieure (214) formant une surface interne du corps de boîtier (210) et faite d'un deuxième métal ayant un point de fusion plus élevé que le premier métal,
dans lequel l'extrémité ouverte (212a) du corps de boîtier (210) est formée sur un bord supérieur de la partie extérieure (213).

7. Module de batterie (10) selon la revendication 6,
dans lequel la plaque supérieure (220) comprend une première partie de couvercle (221) et une deuxième partie de couvercle (223) formant une double couche,
dans lequel la première partie de couvercle (221) forme une surface externe de la plaque supérieure (220) et est faite du premier métal, et la deuxième partie de couvercle (223) forme une surface interne de la plaque supérieure (220) et est faite du deuxième métal.

8. Module de batterie (10) selon la revendication 7,
dans lequel la première partie de couvercle (221) est positionnée sur un bord supérieur de la partie extérieure (213), et la deuxième partie de couvercle (223) est positionnée sur un bord supérieur de la partie intérieure (214).

9. Module de batterie (10) selon la revendication 7,
dans lequel le trou de guidage d'assemblage (220a) est disposé sur un bord de la première partie de couvercle (221).

10. Module de batterie (10) selon la revendication 7,
dans lequel la première partie de couvercle (221) et la deuxième partie de couvercle (223) sont conçues pour avoir la même superficie, et
le trou de guidage d'assemblage (220a) est ménagé uniquement sur le bord de la deuxième partie de couvercle (223) parmi les bords de la première partie de couvercle (221) et de la deuxième partie de couvercle (223).

11. Bloc-batterie comprenant un module de batterie (10) selon l'une quelconque des revendications 1 à 10.
